# EUROPEAN PATENT APPLICATION

(11) **EP 2 495 654 A1**
(43) Date of publication of application: **05.09.2012**
(21) Application number: 11188981.2
(22) Date of filing: 14.11.2011
(51) Int. Cl.: G06F 9/44

(54) **Method, apparatus and computer program product for generating system specifications**

(30) Priority: 03.03.2011 US 39472
(71) Applicant: Siemens Aktiengesellschaft, 80333 München (DE)
(72) Inventor: Boulila, Naoufel, 80809 München (DE)

(57) **Abstract**

Method, apparatus and computer program product involve generating system requirements specifications by receiving information regarding a system user interface, analyzing the information regarding the system user interface and extracting at least a relationship diagram and an interface flow diagram, converting the at least one relationship diagram and the at least interface flow diagram to at least one requirement trace and at least one functional requirement, and generating a system requirements specification document.

## Description

### FIELD OF THE INVENTION

The present invention is related to a method, apparatus and computer program product for generating system specifications. In particular, the present invention is related to extracting requirements from the already existing systems and user interfaces, and via the generated requirements specification to facilitate re-engineering and improvement of existing systems.

### BACKGROUND OF THE INVENTION

Many software and hardware legacy systems today are old technologies, that most likely are no longer supported by their vendors, but are still in use. Sooner or later said systems need to be modernized and improved.

The existing systems lack, among others, the documentation of their requirements. This makes the improvement and modernization of these systems very difficult, very expensive and the improvement process might lead to business interruption. In the absence of their specifications or of documentation regarding their requirements, the systems may only be modernized via re-engineering, since the valuable information such as the requirements behind them is needed. But re-engineering an entire system just to be able to respond better to user demands for improved functionality of the system, if often not an economically viable proposition. Further complicating maters, many of the legacy systems have outdated and difficult-to-use user interfaces. However, it is the user interfaces that include valuable information about the system being used and some rationale behind their functioning. The user interfaces reflect, to some extent, the needs of the users who have funded the development of the legacy systems. Being able to extract the requirements from existing user interfaces provides a substantial amount of crucial information about the undocumented requirements of the legacy systems.

In accordance with today's practices, software is developed according to well defined and standardized methods and processes. It is known that during the development process, first the requirements have to be iteratively elicited and well defined, and it is then when the underlined software or system is developed.

User interface design and development needs, for instance, the underlined requirements of the system, and in some situations, a usability study has to be conducted. Legacy and existing systems lacking the documentation of the underlined requirements are difficult or sometimes impossible to re-engineer and improve.

Therefore, a solution is still necessary to be found to the problem of how to extract requirements from the already existing systems and in particular user interfaces, without having to re-engineer the entire system. Once acceptable quality requirements specification is generated, the underlined system can be improved or even re-engineered.

### SUMMARY OF THE INVENTION

The present invention provides an apparatus, method and computer program product for generating system specifications.

The apparatus includes means for interfacing with a user capable of reading a plurality system interface specifications, processing means capable of extracting from the plurality of system interface specifications information regarding a plurality of system requirements, and means for summarizing the obtained plurality of system requirements capable of producing system requirements specifications. The apparatus further comprises at least one of analysis means, and documentation means. The analysis means are capable of analyzing the plurality of system interface specifications to extract at least one of a relationship diagram and an interface flow diagram. The processing means are capable of receiving the at least one of a relationship diagram and an interface flow diagram and to generate a plurality of requirement traces and a plurality of functional requirements regarding said system interface specifications. The means for summarizing the obtained plurality of system requirements capable of producing system requirements specifications is producing at least one of a structured text or requirement diagram.

Another embodiment of the invention involves a method. The method comprises receiving information regarding a system user interface, analyzing said information regarding the system user interface and extracting at least a relationship diagram and an interface flow diagram, converting said at least one relationship diagram and said at least said interface flow diagram to at least one requirement trace and at least one functional requirement, and generating a system requirements document.

Yet another embodiment of the invention involves a computer program product for generating system specifications. The computer program product for generating system specifications, comprises a computer usable medium including a computer readable program, wherein the computer readable program when executed on a computer causes the computer to receive information regarding a system user interface, analyze said information regarding the system user interface and extract at least a relationship diagram and an interface flow diagram, convert said at least one relationship diagram and said at least said interface flow diagram to at least one requirement trace and at least one functional requirement, and generate a system requirements document.

Other aspects and advantages of the present invention will become apparent from the following detailed description, which, when taken in conjunction with the drawings, illustrate by way of example the principles of the invention.

### BRIEF DESCRIPTION OF THE DRAWINGS

For a fuller understanding of the nature and advantages of the invention, as well as a preferred mode of use, reference should be made to the following detailed description read in conjunction with the accompanying drawings, in which:
Fig. 1 is a schematic representation of the environment of an exemplary UI-REE framework;
Fig. 2 provides a detailed representation of the UI-REE framework of Fig. 1;
Fig. 3 provides an exemplary representation of the relationships between widgets;
Fig. 4 provides an UML diagram of a widget composition, and
Fig. 5 is a block diagram of a method of generating system requirements specifications, according to an embodiment of the invention.

### DESCRIPTION OF THE PREFERRED EMBODIMENTS

The following description is made for the purpose of illustrating the general principles of the invention and is not meant to limit the inventive concepts claimed herein. Further, particular features described herein can be used in combination with other described features in each of the various possible combinations and permutations. Unless otherwise specifically defined herein, all terms are to be given their broadest possible interpretation including meanings implied from the specification as well as meanings understood by those skilled in the art and/or as defined in dictionaries, treatises, etc.

The description may disclose several preferred embodiments for an apparatus, method and computer program product for generating system specifications, as well as operation and/or component parts thereof. While the following description will be described in both in apparatus and method terms, for clarity and to place the invention in context, it should be kept in mind that the teachings herein may have broad application to all types of systems, devices and applications.

The invention provides an user interface requirement re-engineering framework, in short a UI-REE framework, that provides a mechanism to read user interface specifications and to extract the information from the user and system requirements and transform it to a requirement specification document.

In the context of the present invention, by a software requirements specification is understood a requirements specification for a software system that is a complete description of the behavior of a system to be developed. It includes a set of use cases that describe all the interactions the users will have with the software. Use cases are also known as functional requirements. In addition to use cases, the SRS also contains non-functional (or supplementary) requirements. Non-functional requirements are requirements which impose constraints on the design or implementation (such as performance engineering requirements, quality standards, or design constraints).

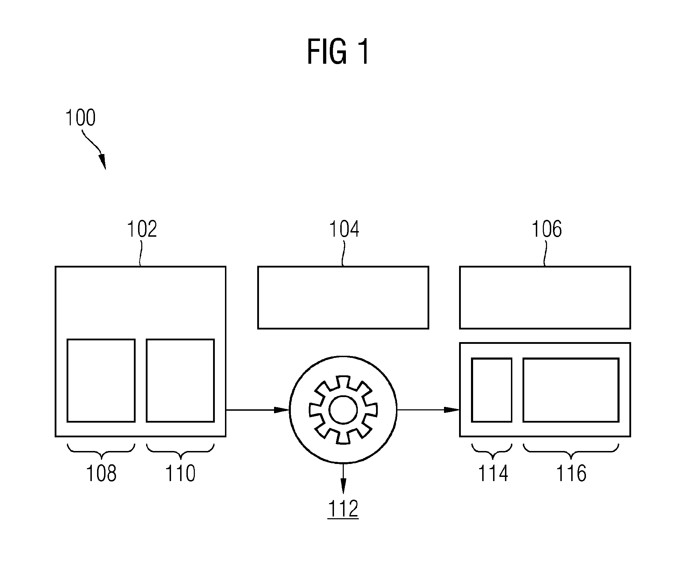

Referring now to the illustration of Fig. 1, Fig. 1 provides a schematic representation of the environment of an exemplary UI-REE framework.

As illustrated in Fig. 1, diagram 100 comprises means for interfacing with a user 102, processing means 104, and means for summarizing the obtained requirements 106. The means for interfacing with a user 102 may exemplarily take the form of an user interface specification 108, or of an graphic user interface 110, but they may as well be of any other type envisioned by the person skilled in the art wishing to practice the invention. The means for interfacing with a user, should the present invention be applied to legacy hardware systems may take the form of control panels, command centers, display panels, or any other implementation that conveys the user information regarding the requirements of the legacy system.

The system interface specifications comprise at least the following characteristics information regarding the system functionality, external interfaces indicating how does the software interact with people, the system's hardware, other hardware, and other software, performance, such as what is the speed, availability, response time, recovery time of various software functions, attributes, such as what are the portability, correctness, maintainability, security, considerations, design constraints imposed on an implementation, such as if the are there any required standards in effect, implementation language, policies for database integrity, resource limits, operating environment(s), etc.

The processing means 104 are envisioned to be implemented such that are capable of storing and executing a user interface requirement re-engineering framework 112, and, as they will be discussed in detail in connection with the embodiments of the present invention, the processing means 104 provide a transformation engine which takes the output of the means for interfacing with a user 102, and converts this output into requirements traces and functional requirements stored in the means for summarizing the obtained requirements 108. The obtained requirements may be exemplarily summarized as structured text 114 or requirement diagrams 116. Any other means of summarizing the obtained requirements that are envisioned by a person skilled in the art are considered to pertained to the scope of the present invention.

Requirements traceability is concerned with documenting the relationships between requirements and other development artifacts. Its purpose is to facilitate the overall quality of the product(s) under development, the understanding of product under development and its artifact; and the ability to manage change.

Not only the requirements themselves should be traced but also the requirements relationship with all the artifacts associated with it, such as models, analysis results, test cases, test procedures, test results and documentation of all kinds. Even people and user groups associated with requirements should be traceable.

Requirements traceability refers to the ability to describe and follow the life of a requirement, in both forwards and backwards direction (i.e. from its origins, through its development and specification, to its subsequent deployment and use, and through all periods of on-going refinement and iteration in any of these phases.)
While this definition emphasizes tracking the life of a requirement through all phases of development, it is not explicit in mentioning that traceability may document relationships between many kinds of development artifacts, such as requirements, specification statements, designs, tests, models and developed components.
Therefore, within the scope of the present invention it is also envisioned that requirements tracing and traceability refers to the ability to define, capture and follow the traces left by requirements on other elements of the software development environment and the trace left by those elements on requirements.
In the requirements engineering field, traceability is about understanding how high-level requirements -- objectives, goals, aims, aspirations, expectations, needs -- are transformed into low-level requirements. It is therefore primarily concerned with the relationships between layers of information. The principal relationship referred to here may be characterized as "satisfaction": how is a requirement satisfied by other artifacts? Other relationships that can be traced are, for example, "verification": how is a requirement verified by test artifacts?

In software engineering, a functional requirement defines a function of a software system or its component. A function is described as a set of inputs, the behavior, and outputs. Functional requirements may be calculations, technical details, data manipulation and processing and other specific functionality that define what a system is supposed to accomplish. Behavioral requirements describing all the cases where the system uses the functional requirements are captured in use cases. Functional requirements are supported by non-functional requirements (also known as quality requirements), which impose constraints on the design or implementation (such as performance requirements, security, or reliability). Generally, functional requirements are expressed in the form "system shall do <requirement>", while non-functional requirements are "system shall be <requirement>". The plan for implementing functional requirements is detailed in the system design. The plan for implementing non-functional requirements is detailed in the system architecture.

As defined in requirements engineering, functional requirements specify particular results of a system. This should be contrasted with non-functional requirements which specify overall characteristics such as cost and reliability. Functional requirements drive the application architecture of a system, while non-functional requirements drive the technical architecture of a system.
In some cases a requirements analyst generates use cases after gathering and validating a set of functional requirements. The hierarchy of functional requirements is: user/stakeholder request -> feature -> use case -> business rule. Each use case illustrates behavioral scenarios through one or more functional requirements. Often, though, an analyst will begin by eliciting a set of use cases, from which the analyst can derive the functional requirements that must be implemented to allow a user to perform each use case.

In accordance with the present invention, the framework denominated UI-REE (User Interface Requirement RE-Engineering) 112 provides a mechanism to read user interface specifications and to extract from them user and system requirements and to transform them to a requirement specification document.

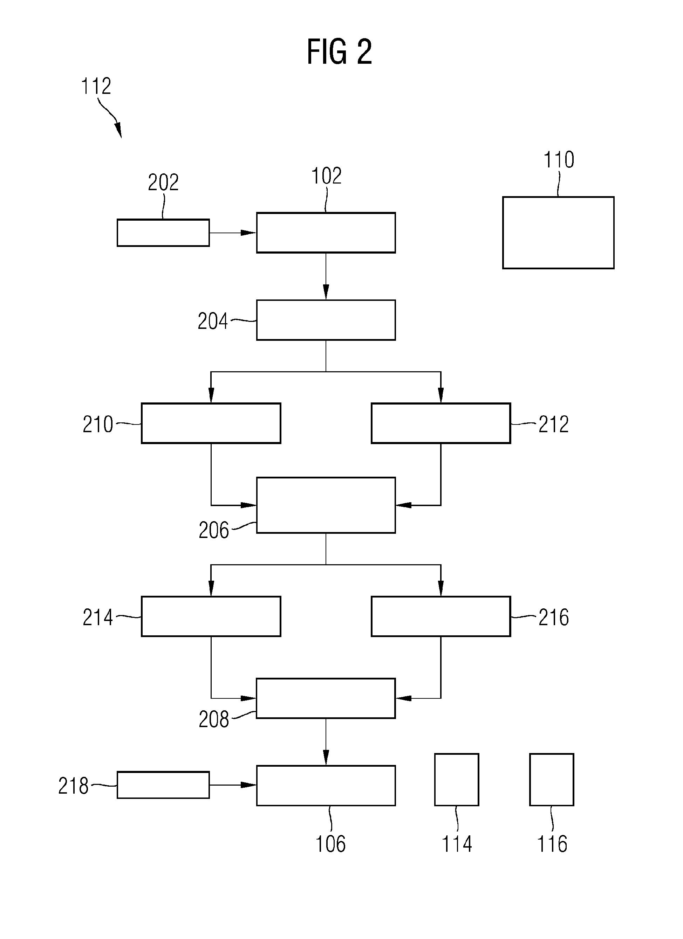

Referring now to Fig. 2, Fig. 2 provides a detailed representation of the UI-REE framework of Fig. 1.

The UI-REE framework 112 comprises an input 202 that receives for example from means for interfacing with user 102 information provided by a graphical user interface 110.

The input component 202 also provides a mechanism to describe the input from means for interfacing with a user 102 using the User Interface Markup Language (UIML). UIML is an XML-compliant language. This component can also transform a GUI specification to a standard user interface definition using UIML.

Processing means 104 comprises at least an analysis means 204, a processing means 206 and documentation means 208.

The analysis means 204 analyses the specification of the means to interact with the user 201 and extracts at least two main artifacts: a relationship diagram 210 and an interface flow diagram 212.

Exemplarily, the analysis means 204 finds what kind of widget, button, window, graphical element or even hardware element that may be mapped to a graphical window, groups them in categories and derives their relationship.

The analysis means 204 may employ a software based solution, a loop that analyses the elements. The analysis means rarely employ human observation. Analysis of user interfaces may be done by independent tools, commercially available or via self implemented software tools to fit the analysis needs.

A relationship diagram 210 is a generated diagram that describes the relationship between the various UI elements (called further in the present document as widgets) and therefore it also describes the relationship between their functions. This, in turn, describes the relationship between their functional requirements. These relationships cover the traceability and the dependency between the requirements.

The interface flow diagrams 212 are typically used for several purposes such as to model the interactions that users have with the software comprised in the analyzed legacy system. The interface flow diagrams 212 enable the user to gain a high-level overview of the user interface for the underlined application.

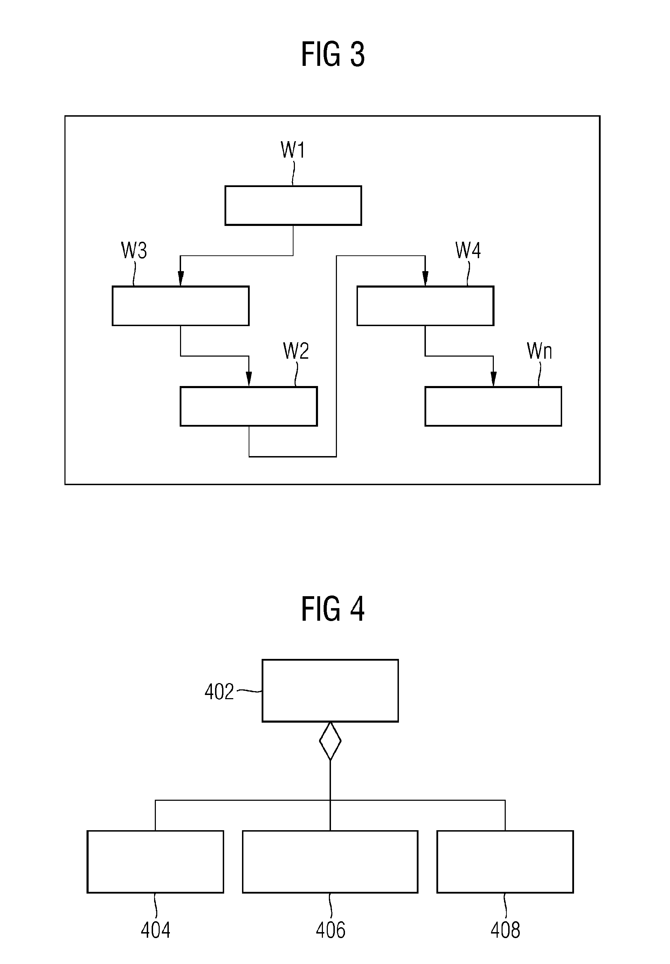

As illustrated in Fig 3, that depicts exemplary relationships between widgets W1, W2, W3, W4, Wn, the relationship diagram illustrates the dependency between the components.

In the computer programming field by "widget" is understood an element of a graphical user interface (GUI) that displays an information arrangement changeable by the user, such as a window or a text box. The defining characteristic of a widget W1...Wn is to provide a single interaction point for the direct manipulation of a given kind of data. In other words, widgets W1...Wn are basic visual building blocks which, combined in an application, hold all the data processed by the application and the available interactions on this data. Most operating systems include a set of ready-to-tailor widgets that a programmer can incorporate in an application, specifying how each should behave.

Fig. 4 provides an UML diagram of a widget composition.

Therefore, as illustrated in Fig. 4 that illustrates in a UML diagram the widget composition, a widget 402 is characterized at least by a name 402, a function 406 and a GUI element 408.

The processing means 206 provides a transformation engine which takes the output of the analysis component 204, the relationship and interface flow diagrams, and converts these into requirements traces 214 and functional requirements 216.

The means for summarizing the obtained requirements 106 takes the output of the processing component 206, at least the plurality of requirements traces 214 and the functional requirements 216, and generates a requirements document containing the requirements formulation according to a well defined template and to the IEEE standard for writing requirements.

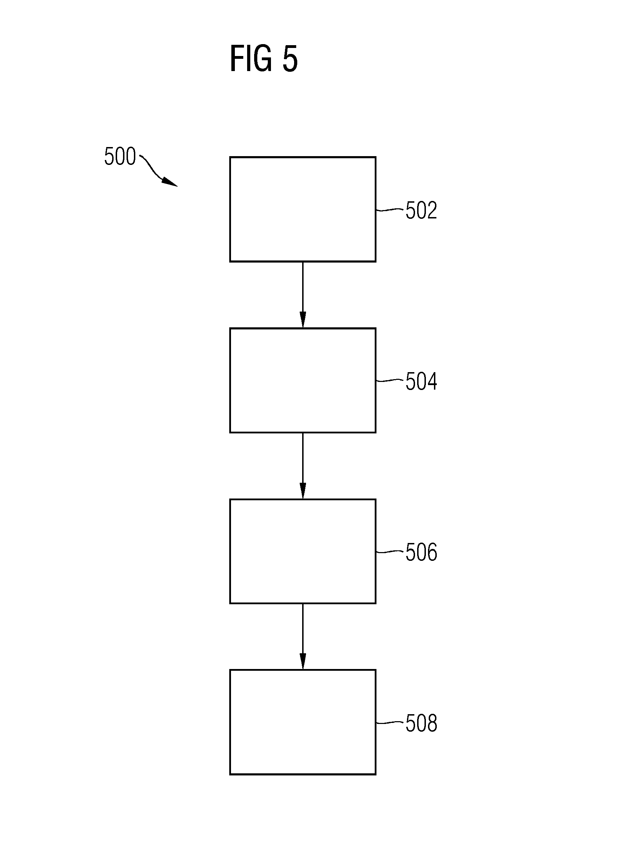

Referring now to Fig. 5, Fig. 5 is a block diagram of a method of generating system requirements specifications, according to an embodiment of the invention.

The present invention proposes a method for generating system requirements specifications 500 that comprises at least receiving information, in step 502, regarding a system user interface, analyzing said information, in step 504, regarding the system user interface and extracting at least a relationship diagram and an interface flow diagram, converting, in step 506, said at least one relationship diagram and said at least said interface flow diagram to at least one requirement trace and at least one functional requirement, and generating, in step 508, a system requirements document.

The step of 502 of receiving information regarding a system user interface is exemplarily implemented via an input 202 of the UI-REE framework 112, that receives for example from means for interfacing with user 102, information provided by a graphical user interface 110. The input component 202 also provides a mechanism to describe the input from means for interfacing with a user 102 using the User Interface Markup Language (UIML). UIML is an XML-compliant language. This component can also transform a GUI specification to a standard user interface definition using UIML.

The step 504 of analyzing the information regarding a system user interface and extracting at least a relationship diagram and an interface flow diagram is exemplarily implemented in the present invention via analysis means 204, a processing means 206 and documentation means 208. The analysis means 204 analyses the received specification and extracts at least two main artifacts: a relationship diagram 210 and an interface flow diagram 212.

The step 506 of converting the at least one relationship diagram and the at least one interface flow diagram to at least one requirement trace and at least one functional requirement is exemplarily implemented in the present invention via the processing means 206 and documentation means 208.

The step 508 of generating a system requirements document is exemplarily implemented in the present invention via the documentation means 208 that takes the output of the processing component, and generates a requirements document containing the requirements formulation according to a well defined template and to the IEEE standard for writing requirements.

The embodiments of the invention, and any means, modules or blocks discussed, can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the embodiments of the invention can take the form of a computer program product accessible from a computer-usable or computer-readable medium providing program code for use by or in connection with a computer, processing device, or any instruction execution system. For the purposes of this description, a computer-usable or computer readable medium can be any apparatus that can contain, store, communicate, or transport the program for use by or in connection with the instruction execution system, apparatus, or device.

The medium can be electronic, magnetic, optical, or a semiconductor system (or apparatus or device). Examples of a computer-readable medium include, but are not limited to, a semiconductor or solid state memory, magnetic tape, a removable computer diskette, a random access memory (RAM), a read-only memory (ROM), a rigid magnetic disk, an optical disk, etc. Current examples of optical disks include compact disk-read only memory (CD-ROM), compact disk-read/write (CD-R/W) and digital versatile disk (DVD).

I/O devices (including but not limited to keyboards, displays, pointing devices, etc.) can be connected to the system either directly or through intervening controllers. Network adapters may also be connected to the system to enable the data processing system to become connected to other data processing systems or remote printers or storage devices through intervening private or public networks. Modems, cable modem and Ethernet cards are just a few of the currently available types of network adapters.

The computer program product of the present invention may be a computer program product for generating system specifications, comprising a computer usable medium including a computer readable program, wherein the computer readable program when executed on a computer causes the computer to: receive information regarding a system user interface, analyze said information regarding the system user interface and extract at least a relationship diagram and an interface flow diagram, convert said at least one relationship diagram and said at least said interface flow diagram to at least one requirement trace and at least one functional requirement, and generate a system requirements document.

In the description above, numerous specific details are set forth. However, it is understood that embodiments of the invention may be practiced without these specific details. For example, well-known equivalent components and elements may be substituted in place of those described herein, and similarly, well-known equivalent techniques may be substituted in place of the particular techniques disclosed. In other instances, well-known structures and techniques have not been shown in detail to avoid obscuring the understanding of this description.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

While certain exemplary embodiments have been described and shown in the accompanying drawings, it is to be understood that such embodiments are merely illustrative of, and not restrictive on, the broad invention, and that this invention not be limited to the specific constructions and arrangements shown and described, since various other modifications may occur to those ordinarily skilled in the art.

## Claims

1. An apparatus for generating system requirements specifications, comprising:
means for interfacing with a user capable of reading a plurality system interface specifications;
processing means capable of extracting from said plurality of system interface specifications information regarding a plurality of system requirements, and
means for summarizing the obtained plurality of system requirements for producing system requirements specifications.

2. The apparatus for generating system requirements specifications of claim 1, further comprising at least one of analysis means, and documentation means.

3. The apparatus for generating system requirements specifications of claim 2, wherein said analysis means are capable of analyzing the plurality of system interface specifications to extract at least one of a relationship diagram and an interface flow diagram.

4. The apparatus for generating system requirements specifications of claim 3, wherein said processing means are capable of receiving said at least one of a relationship diagram and an interface flow diagram and to generate a plurality of requirement traces and a plurality of functional requirements regarding said system interface specifications.

5. The apparatus for generating system requirements specifications of claim 1, wherein said means for summarizing the obtained plurality of system requirements capable of producing system requirements specifications is producing at least one of a structured text system requirements specification and a requirements diagram system requirements specification.

6. A method for generating system requirements specifications, comprising:
receiving information regarding a system user interface;
analyzing said information regarding the system user interface and extracting at least a relationship diagram and
an interface flow diagram;
converting said at least one relationship diagram and said at least said interface flow diagram to at least one requirement trace and at least one functional requirement, and
generating a system requirements document.

7. The method for generating system requirements specifications of claim 6, further comprising the step of analyzing a plurality of system interface specifications to extract at least one of a relationship diagram and an interface flow diagram.

8. The method for generating system requirements specifications of claim 7, wherein said interface flow diagram models the interaction the user has with a software, for a single use case.

9. The method for generating system requirements specifications of claim 7, wherein said interface flow diagram allows high level overview of the user interface for an underlined application.

10. The method for generating system requirements specifications of claim 6, wherein the step of generating a system requirement generates a plurality of requirement traces and a plurality of functional requirements regarding said system interface specifications.

11. The method for generating system requirements specifications of claim 10, wherein at least one of a structured text system requirements specification and a requirement diagram system requirements specification is generated.

12. A computer program product for generating system specifications, comprising:
a computer usable medium including a computer readable program,
wherein the computer readable program when executed on a computer causes the computer to:
receive information regarding a system user interface;
analyze said information regarding the system user interface and extract at least a relationship diagram and an interface flow diagram;
convert said at least one relationship diagram and said at least said interface flow diagram to at least one requirement trace and at least one functional requirement, and
generate a system requirements document.

13. The computer program product of claim 12, further causing the computer to analyze a plurality of system interface specifications to extract at least one of a relationship diagram and an interface flow diagram.

14. The computer program product of claim 12, further causing the computer to generate a system requirement by generating a plurality of requirement traces and a plurality of functional requirements regarding said system interface specifications.

15. The computer program product of claim 12, further causing the computer to generate at least one of a structured text system requirements specification and requirement diagram system requirements specification.
